# EUROPÄISCHE PATENTSCHRIFT

(11) **EP 2 208 168 B1**
(45) Veröffentlichungstag und Bekanntmachung des Hinweises auf die Patenterteilung: **24.05.2017**
(21) Anmeldenummer: 08844007.8
(22) Anmeldetag: 18.10.2008
(51) Int. Cl.: G06K 9/00

(54) **VERFAHREN UND VORRICHTUNG ZUR ERKENNUNG DES VERLAUFS EINER FAHRSPUR**
METHOD AND DEVICE FOR DETECTING THE COURSE OF A TRAFFIC LANE
PROCÉDÉ ET SYSTÈME POUR DÉTECTER LE PROFIL D'UNE VOIE

(30) Priorität: 31.10.2007 DE 102007051966
(43) Veröffentlichungstag der Anmeldung: 21.07.2010
(73) Patentinhaber: ADC Automotive Distance Control Systems GmbH, 88131 Lindau (DE)
(72) Erfinder: WALTER, Michael, 9435 Widau (CH); KLEIN, Wladimir, 88131 Lindau (DE)
(86) Internationale Anmeldenummer: PCT/DE2008/001706
(87) Internationale Veröffentlichungsnummer: WO 2009/056096

(56) Entgegenhaltungen:
- DE-T2- 60 117 348
- NZ-A- 299 442
- KASKE A, WOLF D, HUSSON R: "Lane Boundary Detection Using Statistical Criteria" INTERNATIONAL CONFERENCE ON QUALITY CONTROL BY ARTIFICIAL VISION, 1997, XP002538704 Le Creusot
- VLACIC LJUBO ED - VLACIC LJUBO: "Intelligent Vehicle Technologies: Theory and Applications, Chapter 6: From door to door - principles and applications of computer vision for driver assistant systems" INTELLIGENT VEHICLE TECHNOLOGIES: THEORY AND APPLICATIONS, BUTTERWORTH-HEINEMANN, OXFORD, 1. Januar 2001 (2001-01-01), Seiten 135-138, XP002538705 ISBN: 978-0-7506-5093-9

## Beschreibung

Die Erfindung betrifft ein Verfahren und eine Vorrichtung zur Erkennung des Verlaufs einer Fahrspur gemäß Anspruch 1 bzw. 6.

Zunehmend werden in Automobilen Fahrerassistenzsysteme eingesetzt, die den Fahrer bei der Spurhaltung des Fahrzeugs unterstützen (sogenannte Spurhalteunterstützung). Ausgestaltungen Systeme werden im Englischen als Lane-Departure Warning Systems (LDWS) bezeichnet, wenn sie den Fahrer beim unbeabsichtigten Verlassen der Fahrzeugspur warnen. Manche Systeme können sogar direkt in die Lenkung eingreifen und werden im Englischen als Lane Keeping Systems (LKS) bezeichnet. Im Deutschen werden diese Systeme auch als Spurhalteassistent bezeichnet. Sowohl LDWS als auch LKS messen die Fahrzeugposition relativ zur Fahrspur.

Diese Systeme basieren auf der Auswertung von Bildern, die mit einer Kamera, beispielsweise einer CMOS-Kamera, erfasst wurden. Zur Auswertung wird eine spezielle Bildverarbeitungsalgorithmik eingesetzt, die Strukturen in den erfassten Bildern auswertet, die für eine Fahrzeugspur und deren Verlauf charakteristisch sind, beispielsweise Fahrbahnmarkierungen oder Berandungen einer Fahrzeugspur wie Leitplanken und dergleichen. Die Auswertung wird auch als Tracking bezeichnet, da sie mittels Bildanalyse die charakteristischen Strukturen in fortlaufenden Bildern verfolgt ("tracking").

Um die Funktionsfähigkeit derartiger Systeme sicherstellen zu können, ist die sichere und zuverlässige Auswertung der charakteristischen Strukturen von wesentlicher Bedeutung. Insbesondere kommt es auf die Unterscheidung von für das korrekte Tracking wesentlichen Strukturen von unwesentlichen Strukturen an. Unwesentliche Strukturen sind beispielsweise Grassnarben oder schneebedeckte Fahrbahnränder, die Strukturen aufweisen können, die denen einer Fahrbahnmarkierung gleichen. Die falsche Einordnung derartiger unwesentlicher Strukturen als wesentliche Strukturen kann zu einem Fehltracking und damit zu Fehlwarnungen bei einem LDWS oder gar zu einem fehlerhaften Lenkeingriff bei einem LKS führen.

Aus der Veröffentlichung KASKE A, WOLF D, HUSSON R: "Lane Boundary Detection Using Statistical Criteria" INTERNATIONAL CONFERENCE ON QUALITY CONTROL BY ARTIFICIAL VISION, 1997, XP002538704 Le Creusot, ist eine Spurerkennung unter Verwendung statistischer Kriterien wie Energie, Kontrast, Homogenität und Entropie bekannt. Die Statistiken werden in symmetrischen Fenstern mit einer Größe von 8 x 8 geschätzt.

Aus der DE 601 17 348 T2 ist es bekannt, in einem Erkennungsvorgang in jedem Fahrspurmarkierungskandidaten-Erkennungsbereich einen Fahrspurmarkierungskandidatenpunkt zu erkennen. Hierzu werden geeignete Pixel jedes Liniensegments, das einen Punkt auf einer oberen Basislinie und einen Punkt auf einer unteren Basislinie verbindet, gezählt. Ein geeignetes Pixel ist hierbei ein Pixel, das sich auf dem Liniensegment befindet und dessen Dichte höher ist als ein vorbestimmter Wert, der die Erkennungslinie extrahieren kann. Das Liniensegment, das die größte Zahl der geeigneten Pixel hat, wird aus allen Liniensegmenten in jedem Erkennungsbereich ausgewählt und als erkannte Linie ermittelt.

Ein Verfahren mit den Merkmalen des Oberbegriffs von Anspruch 1 ist aus der NZ 299 442 A bekannt.

Aufgabe der vorliegenden Erfindung ist es daher, ein verbessertes Verfahren und eine verbesserte Vorrichtung zur Erkennung des Verlaufs einer Fahrspur vorzuschlagen.

Diese Aufgabe wird durch ein Verfahren zur Erkennung zur Erkennung des Verlaufs einer Fahrspur mit den Merkmalen nach Anspruch 1 und eine entsprechende Vorrichtung mit den Merkmalen nach Anspruch 6 gelöst. Weitere Ausgestaltungen der Erfindung ergeben sich aus den abhängigen Ansprüchen.

Ein wesentlicher Gedanke der Erfindung besteht nun darin, eine Unterscheidung von für das korrekte Tracking wesentlichen von unwesentlichen Strukturen durch Auswertung der Homogenität von Strukturen durchzuführen. Dieser Gedanke basiert auf der Erkenntnis, dass Kantenpaare innerhalb von Grassnaben oder Schneerändern sich von Fahrbahnmarkierungen meist in ihrer Homogenität unterscheiden. Strukturen auf Grassnaben oder Schneerändern weisen häufig unregelmäßige, zufällig verteilte Strukturen auf, während Fahrbahnmarkierungen im Gegensatz dazu eine definierte geometrische Gestalt besitzen. Nach der Erfindung eignet sich die Homogenität einer Struktur daher zur Auswertung und Unterscheidung von für ein korrektes Tracking wesentlichen von unwesentlichen Strukturen. Dadurch können das Fehltracking aufgrund von unwesentlichen Strukturen vermieden und dadurch die Erkennung des Fahrspurverlaufs verbessert werden.

Die Erfindung betrifft nun gemäß einer Ausführungsform ein Verfahren zur Erkennung des Verlaufs einer Fahrspur, umfassend die folgenden Schritte: Messen von Strukturen der Fahrspur,
Auswerten der Homogenität der Messungen, und
Ermitteln des Fahrspurverlaufs anhand der ausgewerteten Homogenität.

Typischerweise kann das Verfahren in Form eines Algorithmus implementiert sein, der von einem Fahrspurerkennungssystem ausgeführt wird. Der Algorithmus kann auch in einem Fahrerassistenzsystem oder allgemein in einem Sicherheitssystem für ein Fahrzeug implementiert sein. Das Messen kann durch eine Kamera oder einem anderen bildgebenden Sensor erfolgen. Die Messungen stellen demnach die in fortlaufenden Bildern eines Straßenverlaufs vor einem Fahrzeug erfassten Strukturen dar, die für die automatische Bestimmung des Fahrspurverlaufs von Bedeutung sind, beispielsweise die Fahrbahnmarkierungen, Leitplanken oder Fahrbahnbegrenzungen.

Gemäß einer Ausführungsform der Erfindung kann die Homogenität der ermittelten Strukturen dadurch ausgewertet werden, dass die Dichte der von den Messungen eingeschlossenen Fläche und der Anzahl der Messungen ermittelt wird. Es hat sich gezeigt, dass die zur Auswertung der Homogenität verwendeten Parameter relativ gut mit den Daten, die durch die Messungen zur Verfügung stehen oder aus diesen abgeleitet werden können, ermittelt werden können.

Als Dichte kann gemäß einer Ausführungsform der Erfindung der Quotient der Fläche einer die Messungen umschließenden Bounding Box und der Anzahl der Messungen ermittelt werden. Ein Vorteil dieser Ausführungsform besteht darin, dass der Quotient mit verhältnismäßig geringem Berechnungsaufwand ermittelt werden kann. Allgemein ist eine Bounding Box ein kastenförmiges Gebilde, insbesondere ein Rechteck, das entsprechende Objekte umschreibt. Hier ist die Bounding Box insbesondere ein Rechteck, das die Messungen umschließt, insbesondere eine bestimmte Anhäufung von Messungen, beispielsweise mehrere nahezu auf einer Linie aufeinanderfolgende Messungen, wie sie bei einer Fahrspurmarkierung typischerweise auftreten können. Die Bounding Box kann automatisch durch einen Bildverarbeitungsalgorithmus zum Auswerten der erfassten Bilder des Strassenverlaufs gebildet werden.

Weiterhin kann gemäß einer Ausführungsform der Erfindung das für die Messungen verwendete Koordinatensystem gedreht werden, sofern die gemessenen Strukturen diagonal verlaufen. Hierdurch lassen sich bei diagonalen Strukturen wesentlich kleinere Bounding Boxes ermitteln, wodurch eine genauere Auswertung erfolgen kann. Insbesondere bei einem kurvenreichen Fahrspurverlauf kann sich die Drehung des Koordinatensystems der Bildverarbeitung auf das Erkennen von Fehltracking vorteilhaft auswirken, da die Erkennungsgenauigkeit verbessert werden kann.

Die Drehung des Koordinatensystems kann gemäß Ausführungsformen der Erfindung durch ein iteratives Verfahren oder eine Hauptachsentransformation (PCA: Principal Component Analysis) erfolgen.

Aus den durch eine Hauptachsentransformation ermittelten Eigenwerten kann ein Maß für die Fläche der die Messungen umschließenden Bounding Box gebildet und das so gebildete Flächenmaß durch die Anzahl der Messungen dividiert werden, um die Dichte zu erhalten. Als Ergebnis der Hauptachsentransformation werden Eigenvektoren und Eigenwerte der Messwertverteilung erhalten. Die Eigenvektoren beschreiben die Richtung der Hautpachsen und die Eigenwerte die Varianzen in Richtung der Hauptachsen. Die Wurzeln der Varianzen entsprechen den Standardabweichungen und das Produkt kann dann beispielsweise als das Mass für die Flächenberechnung verwendet werden. Durch die Division mit der Anzahl der Messungen kann ein Dichtemaß erhalten werden, das sich zur Erkennung von Fehltracking eignet.

Gemäß einer alternativen Ausführungsform der Erfindung kann die Bounding Box auch aus den Differenzen zwischen den Messungen und einer Prädiktion der Messungen ermittelt werden. Vor allem bei einem eingeschwungenen System kann diese Methode angewandt werden. Diese Ausführungsform besitzt den Vorteil, dass sie rechentechnisch verhältnismäßig schnell ausgeführt werden kann.

Die Bounding Box kann gemäß einer Ausführungsform der Erfindung auch nur aus den aus den Differenzen zwischen den Messungen und einer Prädiktion der Messungen ermittelt werden, wodurch nur auf geraden Fahrspuren ein Fehltracking und das unter Umständen problematische Tracking in Kurven vermieden werden kann.

Bei einer gestrichelten Fahrspur können zudem gemäß einer Ausführungsform der Erfindung der Anfang und das Ende einer Markierung durch Detektion von Übergängen anhand der Messungen ermittelt werden. Hierdurch kann auch ein Fehltracking bei unterbrochener Fahrbahnmarkierung vermieden werden. Weiterhin kann vermieden werden, dass bei unterbrochenen Fahrbahnmarkierungen die von einer Bounding Box umschlossene Fläche sehr groß wird, obwohl die Messungen kompakt verteilt sein können.

Wie bereits oben erwähnt kann das Messen von Strukturen der Fahrspur durch eine Bildanalyse von Kamerabildern gemäß einer Ausführungsform der Erfindung erfolgen.

Die Erfindung betrifft gemäß einer weiteren Ausführungsform eine Vorrichtung zur Erkennung des Verlaufs einer Fahrspur, umfassend eine Messeinrichtung zum Messen von Strukturen der Fahrspur, und eine Auswerteeinrichtung zum Auswerten der Homogenität der Messungen und Ermitteln des Fahrspurverlaufs anhand der ausgewerteten Homogenität.

Die Vorrichtung kann ferner gemäß einer Ausführungsform der Erfindung ausgebildet sein, ein Verfahren gemäß der Erfindung und wie oben erläutert auszuführen.

Weiterhin betrifft die Erfindung gemäß einer Ausführungsform ein automatisches Fahrspurwechselwarnsystem oder Fahrspurhaltesystem, das eine Vorrichtung nach der Erfindung und wie vorstehend beschrieben aufweist.

Schließlich betrifft die Erfindung gemäß einer Ausführungsform ein Fahrzeug mit einem automatischen Fahrspurwechselwarnsystem oder Fahrspurhaltesystem nach der Erfindung und wie vorstehend beschrieben.

Weitere Vorteile und Anwendungsmöglichkeiten der vorliegenden Erfindung ergeben sich aus der nachfolgenden Beschreibung in Verbindung mit dem/den in der/den Zeichnung(en) dargestellten Ausführungsbeispiel(en).

In der Beschreibung, in den Ansprüchen, in der Zusammenfassung und in der/den Zeichnung(en) werden die in der hinten angeführten Liste der Bezugszeichen verwendeten Begriffe und zugeordneten Bezugszeichen verwendet.

Die Zeichnung(en) zeigt/zeigen in
- Fig. 1: ein Diagramm mit regelmäßigen und unregelmäßigen Strukturen unterschiedlicher Homogenität, wie es aus einem oder mehreren Kamerabildern extrahiert werden kann;
- Fig. 2: ein Flussdiagram eines Ausführungsbeispiels der erfindungsgemäßen Verfahrens zur Erkennung des Verlaufs einer Fahrspur;
- Fig. 3: Vergleich der eingeschlossenen Fläche zwischen einer einfachen Bounding Box, der PCA transformierten Verteilung und der Bounding Box aus der Differenz zwischen Messung und Prädiktion;und
- Fig. 4: ein Blockschaltbild eines Ausführungsbeispiels einer Vorrichtung zur Erkennung des Verlaufs einer Fahrspur gemäß der Erfindung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

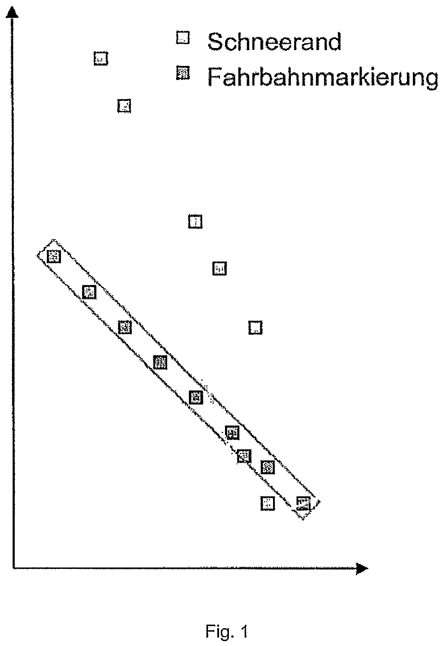

Fig. 1 zeigt in einem Diagramm mit regelmäßigen und unregelmäßigen Strukturen unterschiedlicher Homogenität. Die Strukturen wurden durch Messungen ermittelt, insbesondere durch Kamerabilder, die mit einer CMOS-Kamera erfasst wurden, die in einem Kraftfahrzeug insbesondere an der Windschutzscheibe im Bereich des Rückspiegels montiert ist und den Fahrbahn- bzw. Fahrspurverlauf vor dem Fahrzeug fortlaufend erfasst.

Die erfassten Kamerabilder werden durch eine Bildverarbeitungsalgorithmik derart ausgewertet, dass die Strukturen extrahiert und in einem Koordinatensystem wie dem des in Fig. 1 gezeigten Diagramms dargestellt werden können. Die dunklen Strukturen sind regelmäßige Strukturen und stellen eine Fahrbahnmarkierung dar, während die hellen Strukturen von einem Schneerand stammen und unregelmäßig sind.

Um die Ansammlung bzw. Anhäufung von dunklen Strukturen ist eine Bounding Box in Form eines Rechtecks gelegt, das im Prinzip den Verlauf der Fahrbahnmarkierung darstellt. Nach der Erfindung kann nun anhand des Dichtemaßes ermittelt werden, welche der Strukturen wesentliche, d.h. für den Fahrspurverlauf charakteristische Strukturen sind, und welche Strukturen unwesentlich sind, d.h. für das korrekte Erkennen des Fahrspurverlaufs unwesentlich sind.

Das Dichtemaß wird nach der Erfindung aus dem Quotient der Fläche der die Messungen bzw. dunklen Strukturen umschießenden "Boundig Box" (z.B die absoluten Minima und Maxima aller Messungen) und der Anzahl der Messungen ermittelt. Je kleiner das Dichtemaß ist, desto eher ist dies ein Anzeichen dafür, dass eine wesentliche Struktur durch die entsprechende Bounding Box erfasst wurde. Eine entsprechende Klassifikation kann dann in der Algorithmik zur Detektion des Fahrspurverlaufs erfolgen.

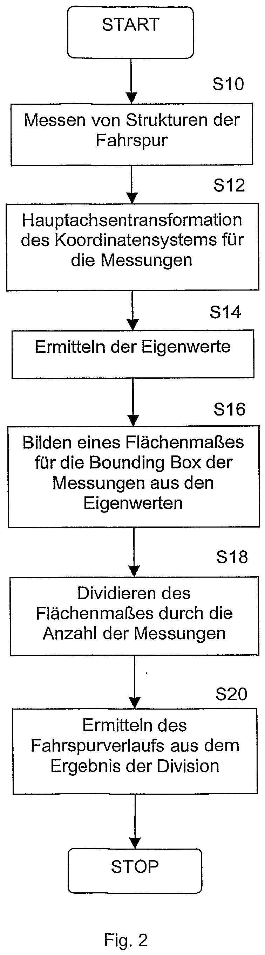

Fig. 2 zeigt anhand eine Flussdiagramms die wesentlichen Schritte eines Algorithmus zur Erkennung des Verlaufs einer Fahrspur:
Im Schritt S10 erfolgt zunächst ein Messen von Strukturen der Fahrspur. Dies kann durch fortlaufende Erfassung von Bildern mit einer elektronischen Kamera und extrahieren wichtiger Strukturen aus den erfassten Bildern erfolgen, wie oben bereits beschrieben.

Im darauffolgenden Schritt S12 wird dann eine Hauptachsentransformation des Koordinatensystems für die gemessenen Strukturen durchgeführt.

Im nächsten Schritt S14 werden die Eigenwerte wie bereits oben beschrieben ermittelt.

Anhand der Eigenwerte wird wie ebenfalls bereits oben beschrieben ein Flächenmaß für jede Bounding Box der gemessenen Strukturen gebildet (Schritt S16). Hierzu sei angemerkt, dass sinnvollerweise um Anhäufungen von gemessenen Strukturen jeweils Bounding Boxes gelegt werden. D.h. es können mehrere Bounding Boxes gebildet werden. Für jede Bounding Box wird dann das Flächenmaß gebildet.

Im folgenden Schritt S18 wird das Flächemaß durch die Anzahl der gemessenen Strukturen in einer Bounding Box dividiert, um die Dichte zu erhalten, die als Maßstab für die Einordnung einer durch mehrere gemessene Strukturen gebildeten Gesamtstruktur als wesentlich oder unwesentlich für die Verfolgung des Fahrspurverlaufs dient.

Im letzten Schritt S20 wird schließlich die so ermittelte Dichte ausgewertet, um den Fahrspurverlauf zu ermitteln. Hierzu kann beispielsweise ab einer bestimmten Dichte eine Anhäufung von gemessenen Strukturen als wesentlich für den Fahrspurverlauf charakterisiert werden.

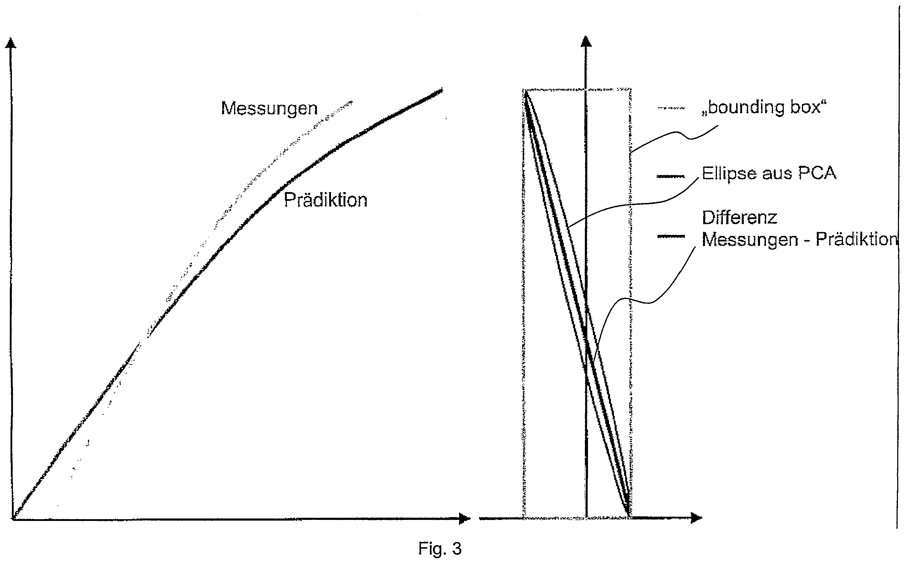

Wie bereits oben erläutert, kann die Verwendung einer einfachen Bounding Box nicht unbedingt geeignet sein, insbesondere wenn Markierungen im Kamera-Koordinatensystem meist diagonal verlaufen. Durch Drehung des Koordinatensystems lassen sich bei diagonalen Strukturen wesentlich kleinere Rechtecke ermitteln, wie es im Zusammenhang mit Fig. 3 im Folgenden genauer erläutert wird. Die Drehung kann durch einen iterativen Prozess oder z.B. durch die Hauptachsentransformation (PCA), Schritt S12 in Fig. 1, erfolgen. Fig. 3 zeigt den Vergleich einer eingeschlossenen Fläche zwischen einer einfachen Bounding Box im ungedrehten Koordinatensystem, der durch eine PCA transformierten Verteilung von Messungen und der aus der Differenz zwischen Messungen und Prädiktion des Fahrspurverlaufs gebildeten Bounding Box, um zu verdeutlichen, wie die eingeschlossene Fläche verringert werden kann.

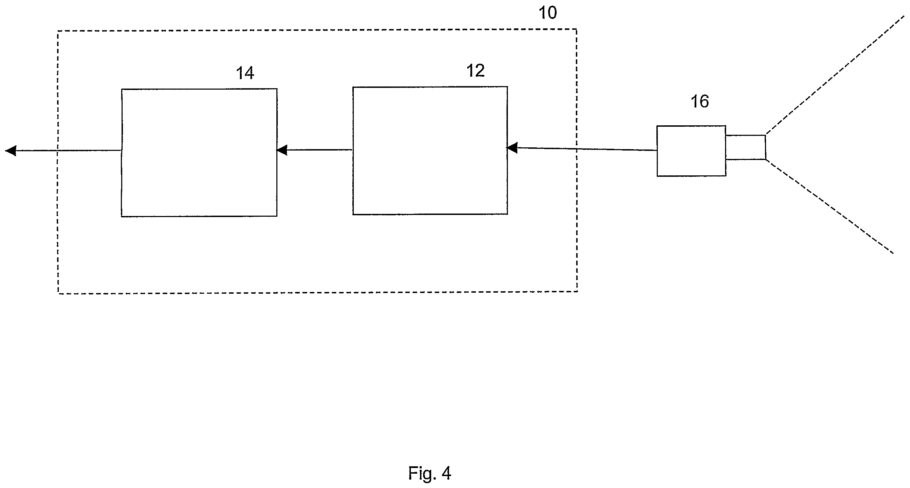

Fig. 4 zeigt schließlich ein Blockschaltbild einer Vorrichtung 10 zur Erkennung des Verlaufs einer Fahrspur. Die Vorrichtung 10 ist mit einer Kamera 16 verbunden, die Bilder von einem Bereich vor einem Fahrzeug erfasst, in dem die Vorrichtung 10 und Kamera 16 installiert sind.

Die von der Kamera 16 erfassten Bilder werden in der Vorrichtung 10 ausgewertet, um den Fahrspurverlauf zu erkennen und insbesondere ein Fehltracking auf Basis der Bilder zu vermeiden. Die Vorrichtung weist hierzu eine Messeinrichtung 12 zum Messen von Strukturen der Fahrspur auf.

Die Messeinrichtung 12 kann hierzu insbesondere eine Bildauswertealgorithmus umfassen, der aus den von der Kamera erfassten Bildern Strukturen extrahiert, die für den Fahrspurverlauf von Bedeutung sein können. Ein Beispiel für derart extrahierte, d.h. gemessene Strukturen ist in Fig. 1 gezeigt.

Die von der Messeinrichtung 12 ermittelten Strukturen werden an eine Auswerteeinrichtung 14 weitergegeben, die speziell ausgebildet ist, die Homogenität der Messungen auszuwerten und daraus den Fahrspurverlauf zu ermitteln, Hierzu ist in der Auswerteeinrichtung 14 ein Algorithmus implementiert, der insbesondere die Schritte S12-S20 des in Fig. 2 gezeigten Verfahrensablaufs implementiert.

Sowohl die Vorrichtung 10 als auch die Einrichtungen 12 und 14 können in Form eines Computerprogramms implementiert sein, das in einem Speicher abgelegt ist und von einem entsprechend leistungsfähigen Prozessor ausgeführt wird.

Zusammenfassend kann mit der Erfindung das Tracking von Fahrspuren dadurch verbessert werden, dass düe den Fahrspurverlauf wesentliche von unwesentlichen Strukturen sicher separiert werden können. Hierzu wird nach der Erfindung ein Maß zum Bewerten eingeführt, ob eine Struktur für das Erkennen des Fahrspurverlaufs wesentlich oder unwesentlich ist.

### Bezugszeichen

- 10: Vorrichtung zur Erkennung von Fehltracking
- 12: Messeinrichtung zum Messen von Strukturen der Fahrspur
- 14: Auswerteeinrichtung zum Auswerten der Homogenität der Messungen und Ermitteln des Fahrspurverlaufs anhand der ausgewerteten Homogenität
- 16: Kamera
- S10-S20: Verfahrensschritte

## Patentansprüche

1. Verfahren zur Erkennung des Verlaufs einer Fahrspur, umfassend die folgenden Schritte:
Messen von Strukturen der Fahrspur durch eine Bildanalyse von Kamerabildern (S10),
Auswerten der Homogenität der Messungen (S12-S18), und
Ermitteln des Fahrspurverlaufs anhand der ausgewerteten Homogenität (S20),
wobei die Homogenität der ermittelten Strukturen dadurch ausgewertet wird, dass die Dichte der von den Messungen eingeschlossenen Fläche und der Anzahl der Messungen ermittelt wird (S18), wobei als Dichte der Quotient der Fläche einer die Messungen umschließenden Bounding Box und der Anzahl der Messungen ermittelt wird (S16, S18),
**dadurch gekennzeichnet, dass**
das für die Messungen verwendete Koordinatensystem gedreht wird (S12), sofern die gemessenen Strukturen diagonal verlaufen,
wobei die Drehung des Koordinatensystems durch ein iteratives Verfahren oder eine Hauptachsentransformation der Verteilung der Messungen (S12) erfolgt.

2. Verfahren nach Anspruch 1,
**dadurch gekennzeichnet, dass**
aus den durch eine Hauptachsentransformation ermittelten Eigenwerten ein Maß für die Fläche der die Messungen umschließenden Bounding Box gebildet wird (S16) und das so gebildete Flächenmaß durch die Anzahl der Messungen dividiert wird (S18), um die Dichte zu erhalten.

3. Verfahren nach Anspruch 1,
**dadurch gekennzeichnet, dass**
die Bounding Box aus den Differenzen zwischen den Messungen und einer Prädiktion der Messungen ermittelt wird.

4. Verfahren nach einem der Ansprüche 1 bis 3,
**dadurch gekennzeichnet, dass**
die Bounding Box nur aus den aus den Differenzen zwischen den Messungen und einer Prädiktion der Messungen ermittelt wird.

5. Verfahren nach einem der vorhergehenden Ansprüche,
**dadurch gekennzeichnet, dass**
bei einer gestrichelten Fahrspur der Anfang und das Ende einer Markierung durch Detektion von Übergängen anhand der Messungen ermittelt wird.

6. Vorrichtung (10) zur Erkennung des Verlaufs einer Fahrspur, umfassend
eine Messeinrichtung (12) zum Messen von Strukturen der Fahrspur durch eine Bildanalyse von Kamerabildern, und
eine Auswerteeinrichtung (14) zum Auswerten der Homogenität der Messungen und Ermitteln des Fahrspurverlaufs anhand der ausgewerteten Homogenität,
**dadurch gekennzeichnet, dass**
sie ausgebildet ist, ein Verfahren nach einem der Ansprüche 1 bis 5 auszuführen.

7. Automatisches Fahrspurwechselwarnsystem oder Fahrspurhaltesystem, das eine Vorrichtung nach Anspruch 6 aufweist.

8. Fahrzeug mit einem automatischen Fahrspurwechselwarnsystem oder Fahrspurhaltesystem nach Anspruch 7.

## Claims

1. A method for detecting the course of a traffic lane, comprising the following steps:
measuring structures of the traffic lane by means of an image analysis of camera images (S10),
evaluating the homogeneity of the measurements (S12-S18), and
determining the course of the traffic lane on the basis of the evaluated homogeneity (S20),
wherein the homogeneity of the detected structures is evaluated in that the density of the area surrounded by the measurements and the number of measurements is determined (S18), wherein as the density the quotient of the area of a bounding box surrounding the measurements and the number of measurements is determined (S16, S18),
**characterised in that**
the coordinate system used for the measurements is rotated (S12), as long as the measured structures are diagonal,
wherein the rotation of the coordinate system is performed by an iterative process or a principal axis transformation of the distribution of measurements (S12).

2. The method according to Claim 1,
**characterised in that**
a measurement for the area of the bounding box surrounding the measurements is formed (S16) from inherent values determined by principal axis transformation and the surface area formed in this way is divided by the number of measurements (S18) in order to obtain the density.

3. The method according to Claim 1,
**characterised in that**
the bounding box is determined from differences between the measurements and a prediction of the measurements.

4. The method according to any of Claims 1 to 3,
**characterised in that**
the bounding box is determined only from the differences between the measurements and a prediction of the measurements.

5. The method according to any of the preceding claims,
**characterised in that**
the beginning and end of a marking of a dashed traffic lane are determined by detecting transitions on the basis of the measurements.

6. A device (10) for detecting the course of a traffic lane,
comprising
a measuring device (12) for measuring structures of the traffic lane by means of an image analysis of camera images, and
an evaluating device (14) for evaluating a homogeneity of the measurements and determining the course of the traffic lane on the basis of the evaluated homogeneity. **characterised in that**
it is designed to perform a method according to any of Claims 1 to 5.

7. An automatic lane change warning system or lane-keeping system, which comprises a device according to Claim 6.

8. A vehicle with an automatic lane change warning system or lane-keeping system according to Claim 7.

## Revendications

1. Procédé pour détecter le profil d'une voie, comprenant les étapes suivantes :
mesure de structures de la voie par une analyse d'images d'images de caméra (S10),
analyse de l'homogénéité des mesures (S12-S18), et
détermination du profil de voie à l'aide de l'homogénéité (S20) analysée,
l'homogénéité des structures déterminées étant analysée par le fait que la densité de la surface incluse par les mesures et du nombre de mesures est déterminée (S18), le quotient de la surface d'une bounding box englobant les mesures et du nombre de mesures étant déterminé en tant que densité (S16, S18),
**caractérisé en ce que**
le système de coordonnées utilisé pour les mesures est tourné (S12) dans la mesure où les structures mesurées sont diagonales,
la rotation du système de coordonnées s'effectue par un procédé itératif ou une transformation des axes principaux de la répartition des mesure (S12).

2. Procédé selon la revendication 1,
**caractérisé en ce que**,
à partir des valeurs propres déterminées par une transformation des axes principaux, il est formé une dimension pour la surface de la bounding box englobant les mesures (S16), et la dimension de surface ainsi formée est divisée par le nombre de mesures (S18) pour obtenir la densité.

3. Procédé selon la revendication 1,
**caractérisé en ce que**
la bounding box est déterminée à partir des différences entre les mesures et une prédiction des mesures.

4. Procédé selon l'une des revendications 1 à 3,
**caractérisé en ce que**
la bounding box est déterminée uniquement à partir des différences entre les mesures et une prédiction des mesures.

5. Procédé selon l'une des revendications précédentes,
**caractérisé en ce que**,
en présence d'une voie avec des traits discontinus, le début et la fin d'un marquage sont déterminés par la détection de transitions à l'aide des mesures.

6. Dispositif (10) pour détecter le profil d'une voie, comprenant un équipement de mesure (12) pour la mesure de structures de la voie par une analyse d'images d'images de caméra, et
un équipement d'analyse (4) pour l'analyse de l'homogénéité des mesures et pour la détermination du profil de voie à l'aide de l'homogénéité analysée,
**caractérisé en ce que**
le dispositif est constitué pour réaliser un procédé selon l'une des revendications 1 à 5.

7. Système automatique de signalement de changement de voie ou système automatique de maintien de voie qui présente un dispositif selon la revendication 6.

8. Véhicule avec un système automatique de signalement de changement de voie ou système automatique de maintien de voie selon la revendication 7.
